# EUROPEAN PATENT APPLICATION

(11) **EP 1 658 956 A2**
(43) Date of publication of application: **24.05.2006**
(21) Application number: 05257168.4
(22) Date of filing: 22.11.2005
(51) Int. Cl.: B29C 65/22, B29C 65/74, B29C 65/78, B65B 9/06

(54) **Side sealing apparatus**

(30) Priority: 22.11.2004 US 994691; 22.09.2005 US 232672
(71) Applicant: Shrink Packaging Systems, Nashua, NH 03061 (US)
(72) Inventor: James, Frank Andrew, Nashua New Hampshire 03063 (US); Lindberg, Jeffrey, Merrimack New Hampshire 03054 (US); Manfredi, Charles, Manchester New Hampshire 03103 (US); Gilbert, John J., Lowell Massachusetts 01852 (US)
(74) Representative: Wilson Gunn

(57) **Abstract**

A side sealing apparatus (10,100) for a shrink packaging machine comprising closed loop temperature control of a heater (28) for maintaining an optimum temperature for cutting and sealing two layers of thermoplastic film (42). The heater comprises a cable or cartridge heater with an internal thermocouple, and it is connected to an automatic temperature controller(38).
The heater is mounted on the side sealer apparatus between two sets of top and bottom V-belts (15,16,21,22) mounted around drive rolls and idler rolls(12,14,18,20). The V-belts provide nip pressure against the film in order to drive the film. In one embodiment, nip pressure is generated by nip rollers (24a-e, 124a-e) on the scrap side of the film, and by low friction belt support guides on the package side of the film. In another embodiment, the belt support guides are replaced with a series of upper and lower nip rollers, and adjustable toggle clamps (104) provide adjustable pressure on the series of upper and lower nip rollers.

## Description

### BACKGROUND OF THE INVENTION

### FIELD OF THE INVENTION

The present invention relates to side sealing apparatus and particularly but not exclusively to side sealing apparatus with closed loop control of a heater.

Embodiments of the invention relate generally to a side sealer of thermoplastic film around a dimensioned article, and in particular to a side sealing apparatus having an internally heated sealing bar integrated with a closed-loop temperature controller operating essentially in free air supported by thin clips in order to minimize heat transfer to the overall assembly, allowing the heater to cut and seal a thermoplastic film in as tight a temperature range as possible, while allowing the overall temperature of the entire unit to operate at close to room temperature.

### DESCRIPTION OF RELATED ART

A commonly used side sealer of thermoplastic film in shrink wrapping machines comprises dual hot wires. The hot wires are typically two (2) five cm (eight inch) heated nichrome wires mounted parallel, one on top of the other. The wires are separated by a gap of approximately 0.025cm (0.010 inches) to 0.038cm (0.015 inches) (the thickness of an average business card). Adjusting and maintaining this gap is critical for proper sealing and cutting of the film web as this film is cut and sealed by radiant heat from the opposing wires. The wires utilized in this arrangement must be installed completely flat against the backing material, in this case, 2.5cm (1 inch) long ceramic "beads" or blocks. No bowing or slight kinks in the wires can be tolerated as a uniform gap must be maintained. Access to these wires requires removal of cover plates and film drive belts. Frequent cleaning of resin buildup is necessary. Cleaning the wires without disturbing the gap setting or flatness of the wire is very difficult. Readjustment of the gap is usually necessary. All of this results in lost production time.

Further, the performance of the dual side sealer is often not stable over extended periods of operation even when initially adjusted to optimum settings. A significant cause of this instability is the drift in wire temperatures over time due to drifts in power conditions typical in many factories. The wire temperature is subject to open loop control, i.e. any changes in factory power feed conditions or operating conditions will cause the wire temperature to change, and conversely, will require an operator to manually adjust the electrical power values to the wire power feed in order to bring the wire temperature back to the desired sealing temperature. Another inherent problem with the dual wire side sealer is the fact that many side sealer components heat up to undesirably high temperatures during operation of the side sealer as a result of the sealing wires radiating heat and its mounting being in contact with the frame they are mounted on which conducts heat to the main assembly resulting in resin build-up during production runs. The heat build-up is detrimental to successful side sealing requiring frequent stopping of the machine in order to clean the molten film build-up on the individual wire assemblies. The resin build-up is a result of unintentional heating of the area of the film that is close to, but outside of, the actual seal area. This unintentionally heated film becomes soft and is prone to stick to components that it contacts, particularly if the side sealer frame components are already at an elevated temperature. In addition, the dual wire side sealer has a large parts count, and coupled with the fact that it operates at an overall elevated temperature, the side sealer belts and bearings are subject to frequent failure, resulting in attendant high maintenance costs. In addition, when the dual wire sealer is inoperable for any reason, it requires sufficient time to cool down in order to restore its operation due to the excessive operating temperature of the entire unit, which frequently reaches temperatures of 57° (135 degrees F). A typical cleaning and resetting will take at least 1 hour, resulting in lost production for that period of time.

Prior art patents include U.S. Patent No. 6,526,728 issued March 4, 2003 to Gregg R. Sorenson et al. and assigned to Conflex Incorporated of Milwaukee, Wisconsin. This discloses a thermoplastic film side sealing mechanism comprising a hot wire assembly having a hot wire mounted between a stationary mounting block and a pivoting mounting block. The hot wire also diverges at an angle which is about 0.81cm (0.32 inches) over an 20.64cm (8.125 inch) run. The divergence is at an angle relative to the path of forwardly disposed belts. The pivoting mounting block provides for releasing tension of the wire to allow quick and easy removal of the wire ends from the assembly clamps. However, there is no closed loop control of the temperature of the hot wire and resin build-up occurs requiring frequent maintenance.

### SUMMARY OF THE INVENTION

It is an object of the present invention to provide improved side sealer apparatus that addresses the problems associated with existing such apparatus.

According to the present invention there is provided side sealer apparatus according to claim 1 below. Preferred features of the apparatus are recited in claims 2 to 19.

The present invention also provides a side sealer system, including side sealer apparatus, as claimed in claim 20, preferred features of which are recited in claim 21.

The invention also provides a method for cutting and sealing two layers of heat sealable material together according to claim 22, preferred features of which are recited in claims 23 to 30.

The invention further provides side sealer apparatus according to claims 31 and 32, preferred features of which are recited in claims 33 to 39 and a method for cutting and sealing two layers of heat-sealable film together according to claim 40, preferred features of which are recited in claims 41 to 46.

Embodiments of the invention provide a closed loop temperature controller for precise temperature control of a heater that directly contacts the film to cut and seal on a side sealer.

Other embodiments of the invention provide low coefficient of friction belt support plates or guides on the package side of the sealer to generate nip pressure between top and bottom V-belts which exert nip pressure against the film to drive the film.

Other embodiments of the invention provide a side sealer apparatus having an upper series of nip rollers and a lower series of nip rollers in contact with the V-belts for generating a nip pressure to drive the film wherein the nip pressure provided by the upper series of nip rollers is adjustable by means of a toggle clamp.

Other embodiments of the invention provide a heat source that closely approximates an ideal sealing temperature of a particular thermoplastic film with a given thickness, and the heat source that cuts the film will operate at precisely the ideal temperature so as to produce consistent film strength seals with no residue and pleasing aesthetics with a wide range of thermoplastic materials, which is not possible with present technology.

In another embodiment the invention provides a simplified side sealer of thermoplastic film by attaching a temperature controlled heater having an internal or external thermocouple in the path of the film for sealing the film on a side of a product that requires no adjustment other than setting the required temperature for sealing a particular film type and gauge at a specific speed.

A further embodiment of the invention provides a method for sealing a thermoplastic film covering a product by using an elongated heater attached to a closed loop temperature controller and mounting the heater at an angle in the path of the film near the edges to be sealed.

A still further embodiment provides a side sealer apparatus for cutting and sealing two layers of film together near an edge of heat-sealable material comprising, means for moving the heat sealable material through the side sealer apparatus, means, attached to the side sealer in the path of heat-sealable material, for generating heat to cut and seal the heat-sealable material near the edge, means may be connected to the heat generating means for providing closed loop control of the heat generating means in accordance with a predetermined heat setting, a top drive roll spaced-apart from a top idler roll on a side of said apparatus above said moving means, a bottom drive roll spaced-apart from a bottom idler roll and positioned immediately under the top drive roll and top idler roll respectively, a first pair of spaced-apart belts, preferably v-belts, positioned around and between the top drive roll and the top idler roll on a side of the apparatus above the moving means, a second pair of spaced-apart belts positioned around and between the bottom driver roll and the bottom idler roll, a top belt guide, having a low coefficient of friction and a bottom groove for a lower portion of an outer one of the first pair of spaced apart V-belts to travel in, to provide nip pressure on the heat sealable material, and a bottom belt guide, having a low coefficient of friction and a top groove for an upper portion of an outer one of the second pair of spaced apart V-belts to travel in, to provide nip pressure on the heat sealable material. The heat generating means is mounted on the side sealer apparatus at a predetermined angle relative to horizontal between the V-belts positioned on an inner side of the heater and the v-belts positioned on an outer side of the heater. The heat-sealable material comprises a thermoplastic film. The heat generating means comprises an elongated metal sheathed body including an internal heating mechanism and a thermocouple. The moving means comprises a conveyor.

In an alternative embodiment, the belt guides are replaced by a plurality of pairs of upper nip rollers positioned between the top drive roll and the top idler roll and in contact with a lower portion of the first pair of spaced-apart belts, a plurality of pairs of lower nip rollers positioned between the bottom drive roll and the bottom idler roll and in contact with an upper portion of the second pair of spaced-apart belts, and means for providing an adjustable nip pressure on the pairs of upper nip rollers in contact with the first pair of spaced-apart V-belts. The means for providing an adjustable nip pressure on the pairs of upper nip rollers in contact with the first pair of spaced-apart V-belts may comprise a nip roller mounting frame for holding the upper nip rollers in a horizontal row, the nip roller mounting frame being attached to a wall of the side sealer via a hinge, and means for applying pressure to an upper surface of the nip roller mounting frame. The pressure applying means may comprise at least one toggle clamp having a leg extending to and in contact with the upper surface of the nip roller mounting frame -

A still further embodiment provides a method for cutting and sealing two layers of heat-sealable film together near an edge in a side sealer apparatus comprising the steps of moving the heat-sealable film through the side sealer apparatus, generating heat to cut and seal the heat-sealable film together near the edge with means attached to the side sealer apparatus in the path of the film, providing a top drive roll spaced-apart from a top idler roll on the side sealer apparatus, providing a bottom drive roll spaced-apart from a bottom idler roll on the side sealer and positioned immediately under the top drive roll and the top idler roll respectively, positioning a first pair of spaced-apart V-belts around and between the top drive roll and the top idler roll on a side of the side sealer apparatus above the means for moving the film, positioning a second pair of spaced-apart V-belts around and between the bottom driver roll and the bottom idler roll, attaching a plurality of pairs of upper nip rollers between the top drive roll and the top idler roll and in contact with a lower portion of the first pair of spaced-apart V-belts, attaching a plurality of pairs of lower nip rollers between the bottom drive roll and the bottom idler roll and in contact with an upper portion of the second pair of spaced-apart V-belts, and providing an adjustable nip pressure on the pairs of upper nip rollers in contact with the first pair of spaced-apart V-belts.

Additional objects, features and advantages of the invention will become apparent to those skilled in the art upon consideration of the following detailed description of the preferred embodiments exemplifying the best mode of carrying out the invention as presently perceived.

### BRIEF DESCRIPTION OF THE DRAWINGS

The appended claims particularly point out and distinctly claim the subject matter of this invention. The various objects, advantages and novel features of this invention will be more fully apparent from a reading of the following detailed description in conjunction with the accompanying drawings in which like reference numerals refer to like parts, and in which:
FIG. 1 is a front elevational view of a side sealer according to the present invention;
FIG. 2 is a top view of the side sealer of Figure 1 showing scrap film separating after the film passes through a heater;
FIG. 3 is a diagram of a side sealer having a heater connected to a closed loop controller for setting and maintaining the temperature of the heater;
FIG. 4 is a front elevational view of the side sealer of FIG. 1 having top and bottom belt support plates attached;
FIG. 5 is a fragmentary cross-section taken along lines 5-5 of FIG. 4 showing top and bottom belt support plates positioned for contact with V-belts on a package side;
FIG. 6 is a top view of a side sealer system showing the method of film wrapping;
FIG. 7A is an end view of a folded film as it comes off a film roll;
FIG. 7B is an end view of the folded film with open edges before side sealing and after it has been inverted;
FIG. 7C is an end view of the film being held open by an inverting head to enable a package to enter within the film envelope;
FIG. 7D is an end view of the folded film of FIG. 6C after side sealing a product within the film;
FIG. 8 is a front elevational view of a top belt guide;
FIG. 9 is a side elevational view of the top belt guide of FIG. 8;
FIG. 10 is a bottom view of the top belt guide of FIG. 8;
FIG. 11 is a front elevational view of a bottom belt guide;
FIG. 12 is a side elevational view of the bottom belt guide of FIG. 11;
FIG. 13 is a top view of the bottom belt guide of FIG. 11;
FIG. 14 is a front elevational view of an alternate embodiment of a side sealer according to the present invention;
FIG. 15 is a top view of the side sealer of FIG. 14 with V-belts removed;
FIG. 16 is a partial front perspective view of FIG. 14 showing an adjustable toggle clamp in an opened position;
FIG. 17 is an exploded left side elevational view of the side sealer showing top and bottom drive roll or pulleys, upper and lower nip rollers attached to a nip roller mount, and toggle clamp mounted above the nip roller mount;
FIG. 18 is a cross-sectional view of the side sealer of FIG. 14 taken along lines 18 ― 18; and
FIG. 19 is a rear perspective view of film tracking rollers on an end of the side sealer.

### DESCRIPTION OF ILLUSTRATIVE EMBODIMENT

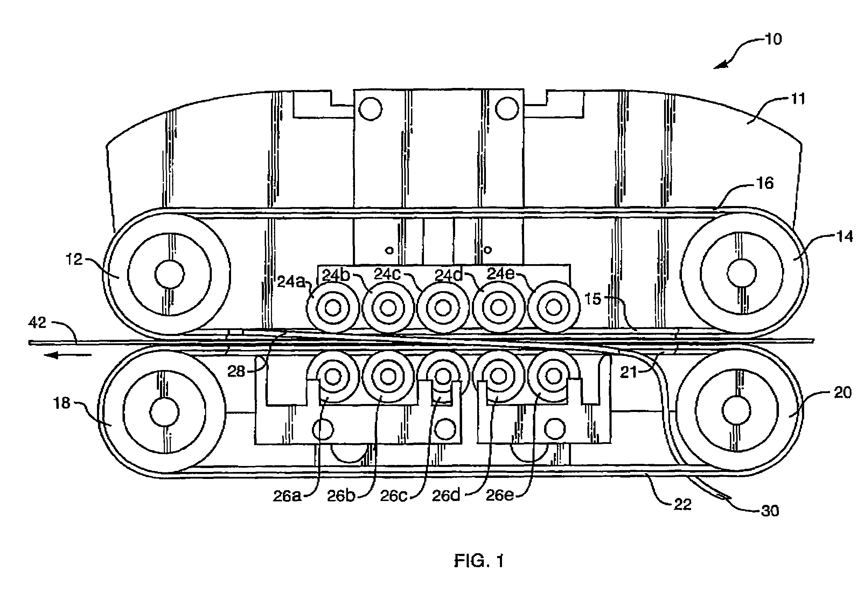

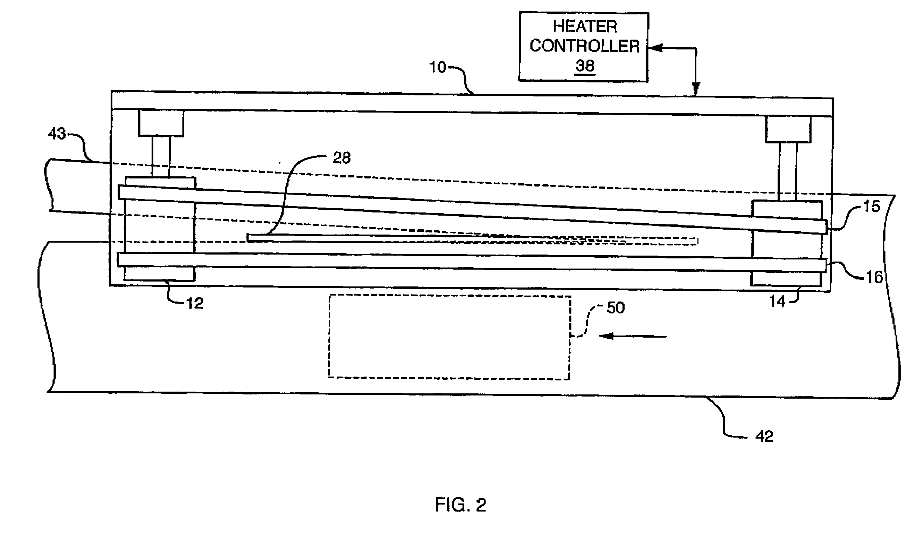

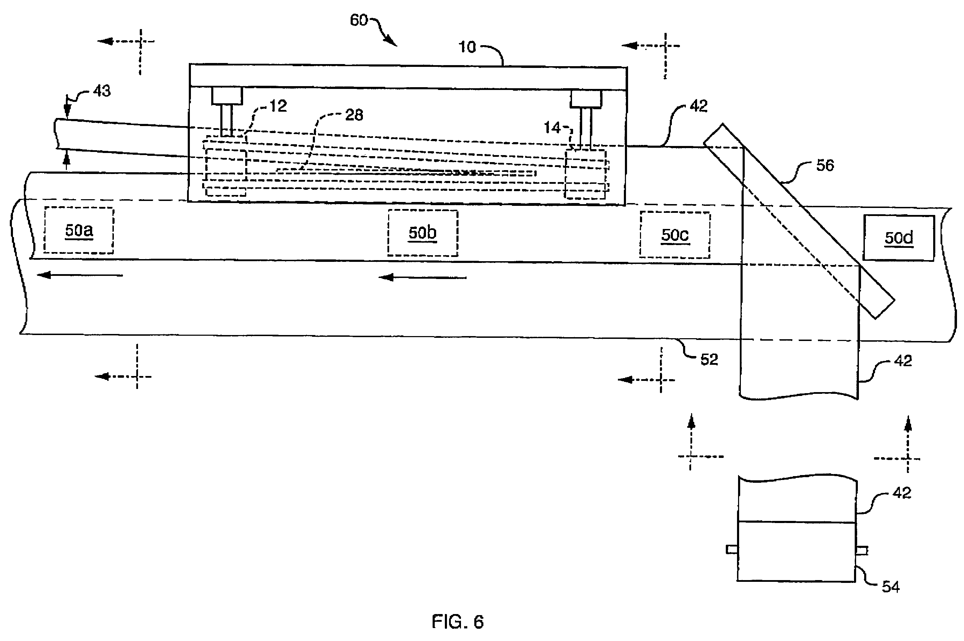

Referring to FIG. 1 and FIG. 2, FIG. 1 is a front elevational view of a side sealer 10 according to the invention with belt support plates removed, and FIG. 2 is a top view of the side sealer 10 shown in FIG. 1. The side sealer 10 performs a cutting and sealing operation near edges of a thermoplastic film 42 covering a package 50 using a heater 28. The side sealer 10 comprises a top drive roll 12 and a bottom drive roll 18, a top idler roll 14 and a bottom idler roll 20. There are two sets of V-belts that drive a film 42 to be sealed along a conveyor 52 (FIG. 6) through the side sealer 10. A top set includes two upper V-belts 15, 16 which are positioned around and between top driver roll 12 and the idler roll 14. A bottom set includes two lower V-belts 21, 22 which are positioned around and between the bottom drive roll 18 and the bottom idler roll 20. The heater 28 is mounted to the side sealer between the inner package side top and bottom belts 16 and 22 and the scrap side top and bottom belts 15 and 21, and the heater 28 is positioned on an angle of approximately two degrees more or less relative to horizontal so that it intersects the path of the film 42 depending on the film type to be sealed. The top and bottom belts 16 and 22 are on the package side and oriented between the drive roll 12 and the idler roll 14 parallel to the conveyor 52, while the top and bottom belts 15 and 21 on the scrap side of the film 42 are angled away from the conveyor 52. The heater 28 is controlled by heater controller 38.

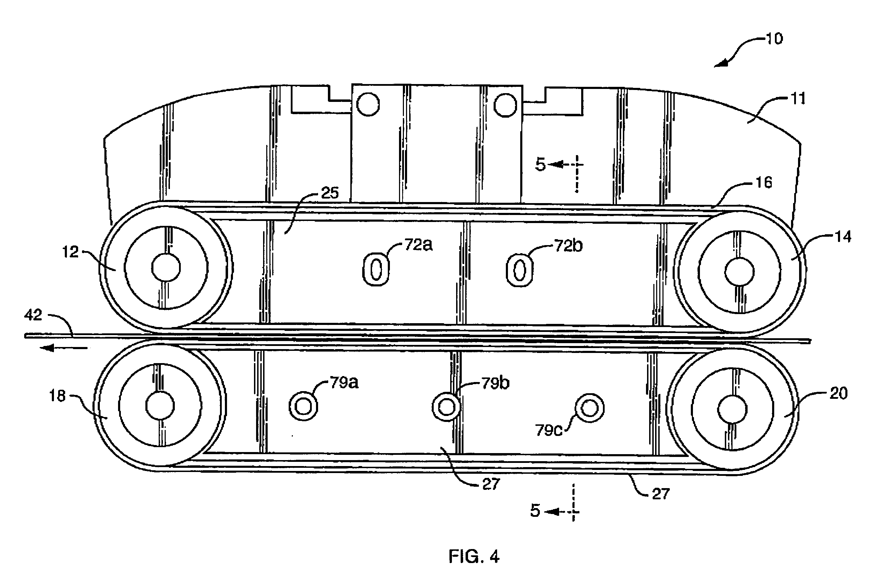

The side sealer 10 comprises an upper series of nip rolls 24a-24e and a lower series of nip rolls 26a-26e mounted directly under the upper series of nip rolls 24a-24e. The V-belts need to exert a "nip" pressure against the film 42 in order to drive the film 42. The nip rolls 24a-24e and 26a-26e are used to generate the nip pressure on the top and bottom scrap side V-belts 15 and 21. However, belt support plates or guides 25, 27 (FIG. 4) are used to generate nip pressure between the top and bottom V-belts 16, 22 on the package side. For example, a top belt support plate or guide 25 is manually pushed downward to create the nip force before the top belt support plate or guide 25 is screwed into place.

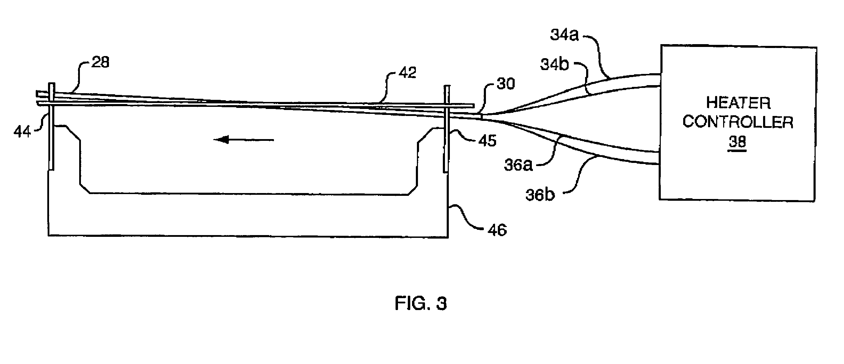

Referring now to FIG. 3, a diagram of the heater controller 38 connected to the heater 28 by a cable 30 is illustrated for setting and maintaining the temperature of the heater 28. The heater controller 38 comprises a closed loop temperature controller which maintains a predetermined set temperature to within less than one percent. The closed-loop controller may be embodied by temperature controller Model 93 manufactured by Watlow of St. Louis, Missouri 63146. The heater 28 comprises a metal sheathed body with resistive internal electrical wiring as a preferred embodiment. The heater 28 is attached to the side sealer 10 by heater brackets 44, 45 which are mounted on a heater frame 46.

When an electrical current is applied to the heater 28 via wires 34a, 34b, the internal mechanism generates heat that is efficiently transferred to the metal sheath of the heater 28. By varying the electrical power to the heater 28, the temperature of the heater 28 can be increased or decreased. The heater replaces pairs of nichrome resistive wires used in prior art open loop dual wire systems. It also replaces other methods of cutting and sealing of films on side sealer equipment. In operation the two layers of the film 42 that are to be cut and sealed together are guided into intimate and precise contact with the heater 28. Heat is efficiently transferred from the heater 28 to the film 42 producing a strong, consistent seal.

Still referring to FIG. 3, a thermocouple, commonly known in the art, is embedded within the sheath of the heater 28, as a preferred embodiment. Alternatively, a thermocouple external to the heater can be positioned in close proximity to the heater. The thermocouple generates an electrical signal that is proportional to the temperature of the heater 28. The thermocouple signal is carried via wires 36a, 36b to heater controller 38 for closed loop control of the temperature of heater 28. The operation of the closed loop control system embodied by the heater controller 38 and the heater 28 is as follows: an operator inputs a predetermined temperature to the heater controller 38. The predetermined value is based on previous experience and in general, depends on film type, thickness, and the conveyor 52 (FIG. 6) speed. The heater controller 38 receives a signal from the thermocouple in the heater 28 on a continuous basis. The heater controller 38 has circuitry/logic that compares the actual temperature of the heater 28 (based on thermocouple signal) to the predetermined set temperature. If the actual temperature of the heater 28 is different than the set temperature, the controller adjusts the electric power level to the heater 28 to cause the actual temperature of the heater 28 to converge towards the set temperature. This process of the heater controller 38 comparing actual heater temperatures to set temperature occurs on a continuous, real time basis. Thus, once the operator inputs the set temperature to the heater controller 38, the heater temperature will be maintained at the set temperature within a close range or tolerance of less than one percent without any further operator intervention, regardless of any fluctuating incoming voltage. The heater controller 38 makes any adjustments required in response to any changes in operational conditions on an automatic basis. The heater 28 may be embodied by Cable Heater Part # 125FH014AX-1992 manufactured by Watlow Corporation of St. Louis, Missouri 63146. The heater controller 38 may be embodied by Temperature Controller Model #93AA-1CD0-00RG manufactured by Watlow Corporation of St. Louis, Missouri 63146.

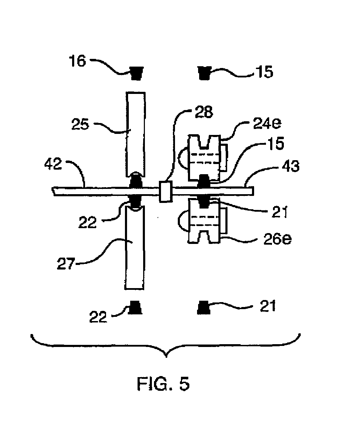

Referring to FIG. 4 and FIG. 5, FIG. 4 is a front elevational view of the side sealer 10 of FIG. 1 according to the present invention showing the top belt support plate or guide 25 and the bottom belt support plate or guide 27 attached to the side sealer 10 which provide the nip pressure on the top and bottom V-belts 16 and 22. FIG. 5 is a fragmentary cross-section taken along lines 5-5 of FIG. 4 showing the top belt support plate or guide 25 in contact with the lower portion of top v-belt 16 and the bottom belt support plate or guide 27 in contact with the upper portion of bottom V-belt 22 to provide the nip pressure on the package side film drive belts 16, 22.

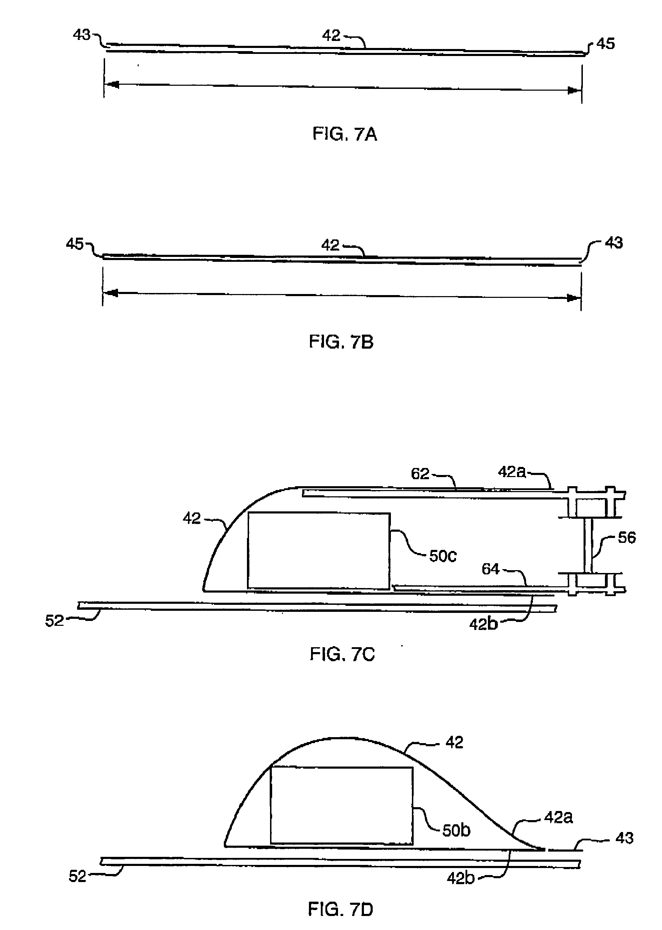

Referring to FIG. 6 and FIGS. 7A-7D, FIG. 6 is a top view of a side sealer 60 showing the method of performing the side sealing operation with the thermoplastic film 42 covering the product 50a-50d. FIGS. 7A-7D show the approximate appearance of the thermoplastic film 42 at various stages in the process. The side sealer system 60 comprises a conveyor 52 which moves the product 50a-50d onto the film 42 from right to left as indicated by arrow 61, and moves the product 50a-50d along the side sealer 10 for cutting and sealing of the film 42. The film 42 comes off a roll 54 and is opened by a film inverting head 56 having an upper arm 62 and a lower arm 64, or in other cases, a film inverting head in which the upper arm 62 and lower arm 64 (FIG. 7C) are manufactured as a single piece.

Still referring to FIG. 6 and FIGS. 7A-7D, FIG. 7A shows the thermoplastic film 42 as it comes off the roll 54 with an opening 43 on the left side and a folded side 45 on the right side. FIG. 7B shows the film 42 reversed with the opening 43 on the right side, which is the side that faces the side sealer 10, and the fold 45 on the left side, which is the side facing the package 50. This reversal of the film 42 is accomplished by the film inverting head 56 by draping the film 42 over the film inverting head 56, and arms 62, 64 open the film 42 so that a product 50C coming along the conveyor 52 is enclosed by the film 42 prior to cutting and sealing the upper and lower film edges 42a, 42b as illustrated in FIG. 7C. FIG. 7D shows the film 42 after the film edges 42a and 42b are cut and sealed by the side sealer 10.

### FIRST ALTERNATE EMBODIMENT

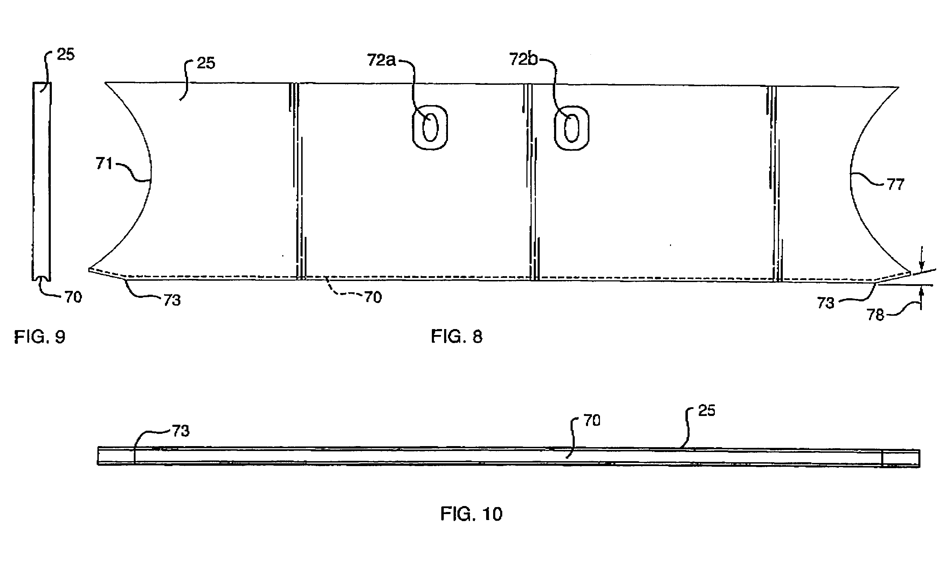

Referring to FIG. 8, a front elevational view of the top belt guide 25 is shown having two elongated holes 72a, 72b to facilitate attaching the belt guide 25 to the sides of the side sealer 10 and adjusting the belt guide 25 against the lower portion of V-belt 16, which is positioned between top drive roll 12 and idler roll 14. The ends 71, 77 of the belt guide 25 are curved inwardly at a radius to correspond with the radius of the pulley rolls. In the preferred embodiment shown in FIGS. 8-10, the belt guide 25 is approximately 28cm (11 inches long), 1cm (2.56 inches) high and 0.64 (0.25 inch) thick; however, other sizes of belt guide 25 may be implemented on a side sealer.

Referring to FIG. 9, a side elevational view of the top belt guide 25 shows a bottom groove 70 having a radius of approximately 0.15cm (0.06) inch so that the belt only protrudes slightly into the groove 70 to minimize any undesired frictional force.

Referring to FIG. 10, a bottom view of the top belt guide 25 shows the groove 70 and the break point 73 where each of the bottom ends of belt guide 25 slope upward at an angle 78 of approximately ten degrees.

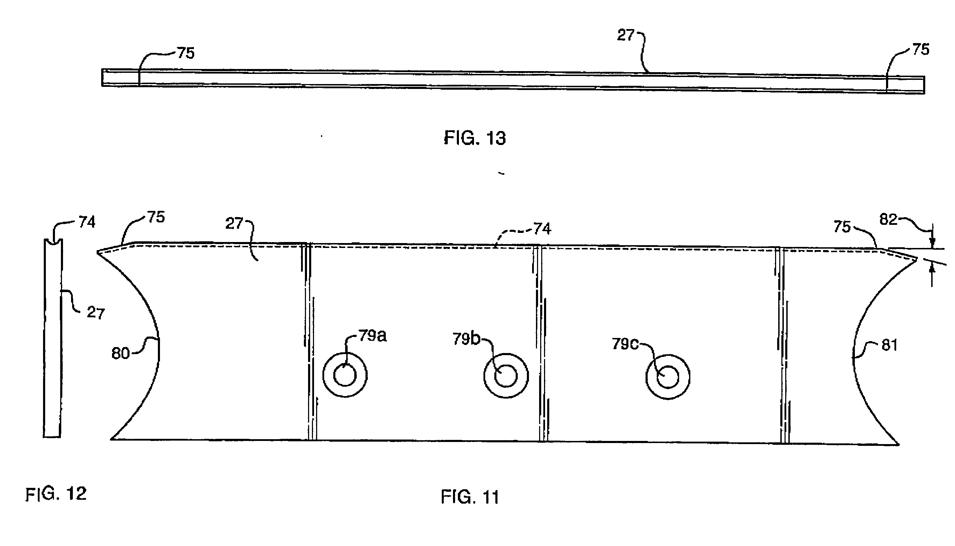

Referring to FIG. 11, a front elevational view of the bottom belt guide 27 is shown, having three holes 79a, 79b, 79c for attaching the belt guide 27 to the lower portion of the side sealer 10. The bottom belt guide 27 comprises a groove 74 along the length of its top edge for receiving the upper portion of V-belt 22, which is positioned between the bottom drive roll 18 and the bottom idler roll 20. The ends 80, 81 of the belt guide 27 are curved inwardly to correspond with the radius of the pulley rolls. In the preferred embodiment shown in FIGS. 11-13, the bottom belt guide 27 is approximately 28.6cm (11.25 inches) long, 6.12cm (2.44 inches) high, and 0.64cm (0.25 inches) thick; however, other sizes of bottom belt guide 25 may be implemented on a side sealer.

Referring to FIG. 12, a side elevational view of the bottom belt guide 27 shows the top groove 74 having a radius of approximately 0.15cm (0.06 inch) so that the belt 22 only protrudes slightly into the groove 74 to minimize any undesired frictional force.

Referring to FIG. 13, a top view of the bottom belt guide 27 shows the groove 74 and the start of the break point 75 where the top ends of belt guide 27 slope downward at an angle 82 of approximately ten degrees. In order to minimize frictional forces, the top belt guide 25 and the bottom belt guide 27 are made from a thermoplastic resin, particularly a Delrin® plastic such as Delrin® 150E Homopolymer having a maximum continuous use temperature of 85°C (185 degrees Fahrenheit) and a dynamic coefficient of friction of 0.20. It is manufactured by UNITAL. Other manufacturers of low friction, high temperature plastic materials and other such materials may be substituted to embody the belt guide 25, 27.

### SECOND ALTERNATE EMBODIMENT

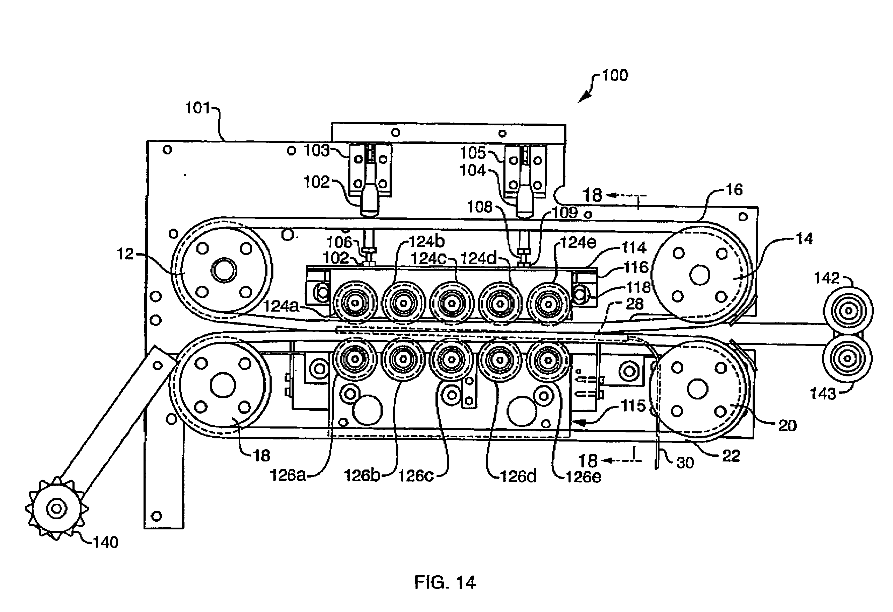

Referring to FIG. 14, a front elevational view of a second alternate embodiment of a side sealer 100 according to the present invention is shown. Elements of side sealer 100 which are the same as elements of the embodiment shown in FIG. 1 have the same reference number. The side sealer 100 performs a cutting and sealing operation the same as side sealer 10, but because of certain improvements to be described, the side sealer 100 performs a more efficient cutting and sealing operation near edges of a thermoplastic film 42 for covering a package 50 (FIG. 2) by eliminating lateral film 42 slippage while the film 42 is driven through the sealing process by the V-belts 15, 16, 21, 22. In some cases, the amount of thermoplastic film used is reduced with the side sealer 100 embodiment because of increased grip on the film 42. The cutting and sealing is performed using the heater 28. The second alternate embodiment shown in FIG. 14 employs a series of upper rotating rollers 124a - 124e and a series of lower rotating rollers 126a - 126e instead of the top belt guide 25 and bottom belt guide 27 of FIG. 4.

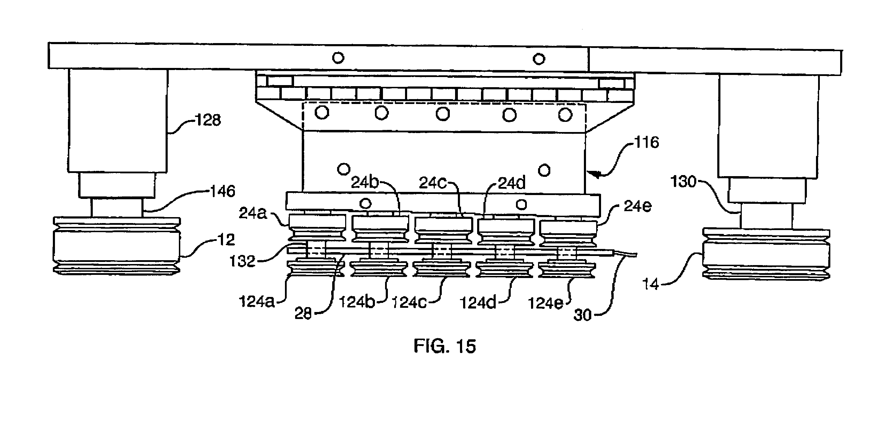

Referring to FIG. 14 and FIG. 15, FIG. 15 is a top view of the side sealer of FIG. 14 with the V-belts removed. The side sealer 100 comprises a top drive roll 12 and a bottom drive roll 18, a top idler roll 14 spaced apart from the top drive roll 12 and a bottom idler roll 20 spaced apart from the bottom drive roll 18, an upper set of V-belts 15, 16 and a bottom set of V-belts 21, 22. Similar to the embodiment shown in FIG. 1, the top set of V-belts 15, 16 are positioned around and between top drive roll 12 and the idler roll 14 and the bottom set of V-belts 21, 22 are positioned around and between the bottom drive roll 18 and the bottom idler roll 20. The heater 28 extends from the cable 30 and is mounted to the side sealer 100 between the inner package side top and bottom belts 16 and 22 and the scrap side top and bottom belts 15 and 21. The heater 28 is positioned at an angle of approximately two (2) degrees relative to horizontal more or less depending on the film to be sealed so that it intersects the path of the film 42 passing through the side sealer 100. The top and bottom belts 16 and 22 are on the package side and oriented between the drive roll 12 and the idler roll 18 parallel to the conveyor 52 (FIG. 6), while the top and bottom belts 15 and 21 on the scrap side of the film 42 are angled away from the conveyor 52. The heater 28 is controlled by heater controller 38 (FIG. 3).

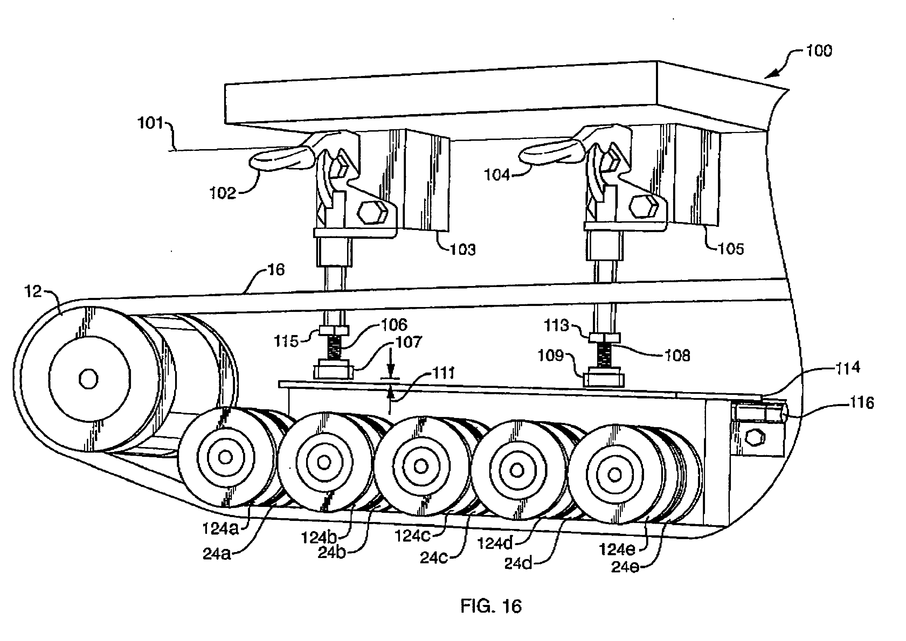

Referring to FIG. 14 - 16, FIG. 16 is a partial front perspective view of FIG. 14. The side sealer 100 comprises an upper series of pairs of nip rollers 24a - 24e and 124a - 124e, extending from a top nip roller mount 114 and a lower series of pairs of nip rollers 26a - 26e and 126a - 126e, mounted directly under the upper series of pairs of nip rollers 24a - 24e and 124a - 124e, extending from a bottom nip roller mount 115. The V-belts 15, 16, 21, 22 ride in the grooves of the nip rollers 24a - 24e, 124a - 124e, 26a - 26e, and 126a - 126e and provide a nip pressure against the film 42 in order to drive the film 42. The side sealer embodiment shown in FIGs. 14 - 16 comprises a series of 5 pairs of nip rollers but additional pairs of nip rollers may be used in larger embodiments of side sealers. The nip pressure is adjusted by raising and lowering the top nip roller mount 114 which is attached to a hinge 116. Adjustable toggle clamp 102 attached to a toggle clamp mount 103 and toggle clamp 104 attached to toggle clamp mount 105 are used to apply downward vertical pressure to set the appropriate nip pressure on the film 42. A leg 106 of toggle clamp 102 comprises a foot 107 which rests on top of the top nip roller mount 114, and likewise a leg 108 of toggle clamp 104 comprises a foot 109 which rests on top of the top nip roller mount 114. When the toggle clamps 102 and 104 are closed, the feet 107, 109. push down on the top of the nip roll mount 114 causing the series of the pair of upper nip rollers 24a - 24e and 124a - 124e to apply nip pressure to the upper set of V-belts 15, 16. Each of the legs 106 and 108 is threaded, and therefore, the length of each leg is adjustable. Lock nuts 113 and 115 on each of the toggle clamp legs are tightened to maintain the correct nip pressure. When the toggle clamps 102, 104 increase the pressure on the series of the pairs of upper nip rollers 24a - 24e and 124a - 124e additional pressure occurs between the top and bottom drive belts 15, 16, 21, 22 that drive the film 42. The toggle clamps may be embodied by Model TC-601, manufactured by Destaco Company of Birmingham, Michigan. Instead of using toggle clamps 102, 103, an air cylinder may be employed for applying a force to the top nip roller mount 114.

There is substantially no drag between the V-belts 15, 16, 21, 22 and the series of upper and lower nip rollers in FIG. 14, and therefore, there is no substantial amount of heat generated. The level of downward vertical pressure that can be applied to the series of upper nip rollers 24a - 24e, 124a, 124e can be adjusted to a pressure level not attainable with stationary belt guides. This level of downward vertical pressure would stall the drive to the side sealer 100 if the stationary belt guides 25, 27 were used. This higher level of downward vertical pressure ensures that adequate film drive will be maintained over long periods of production runs, even when running high slip films or films that are coated with slip agents that tend to transfer to and build up on the drive V-belts, inhibiting the ability of the V-belts over time to reliably drive the film.

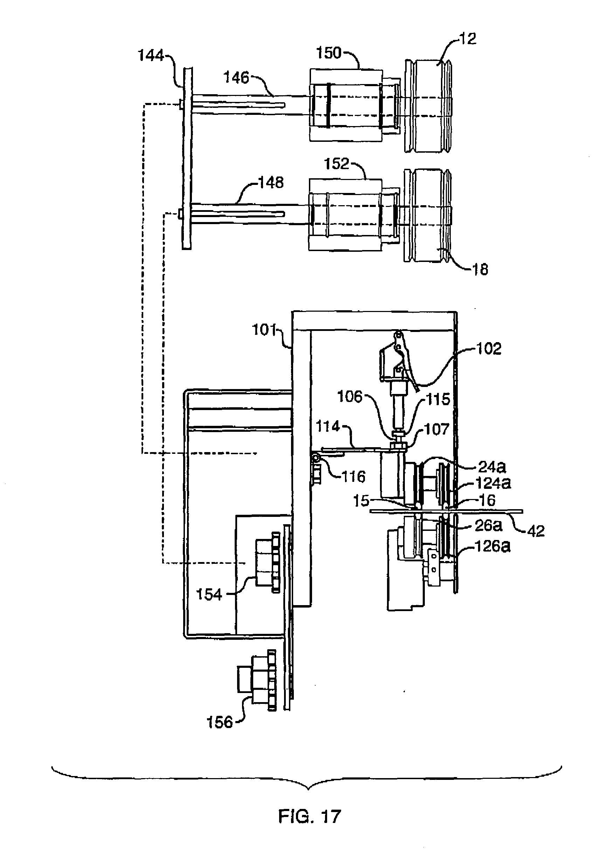

Referring now to FIG. 17, FIG. 17 is an exploded left side elevational view of the side sealer 100 showing the top and bottom drive rolls or pulleys 12, 18 extending from bearing blocks 150, 152 and attached to drive shafts 146, 148 respectively. The toggle clamp 102 is shown in the closed position and the foot 107 of leg 106 is pressing against the top of the top nip roller mount 114 which rotates around hinge 116. The pairs of upper nip rollers 24a and 124a press down on V-belts 15, 16 which provide the adjustable nip pressure on the film 42. Also shown in FIG. 17 are spur gear 144 and sprockets 154 and 156 for driving the top and bottom drive rolls 12, 18.

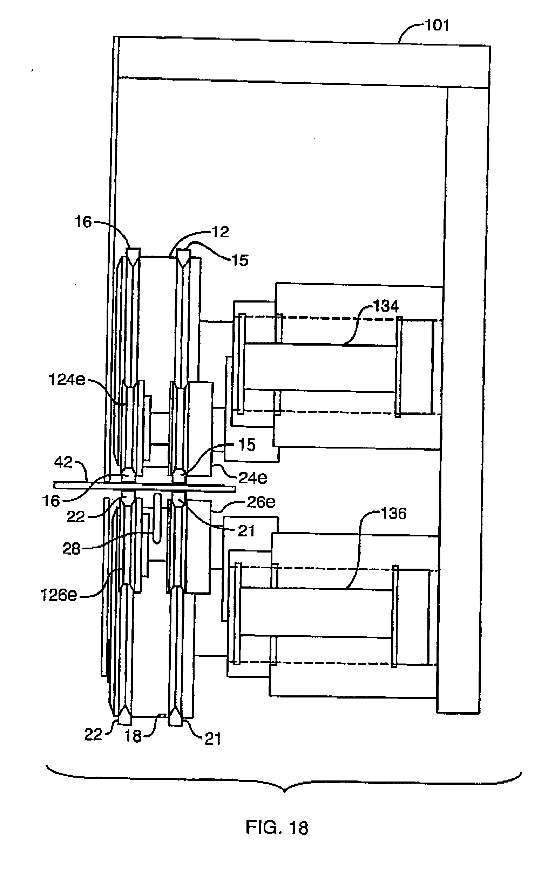

Referring to FIG. 18, a cross-sectional view of the side sealer 100 of FIG. 14 is shown taken along lines 18 ― 18. Upper nip rollers 24e - 124e are shown with V-belts 15 and 16 positioned within their grooves, and the lower portions of V-belts 15 and 16 are in contact with the film 42. The pair of lower nip rollers 26e - 126e are mounted directly under the pair of upper nip rollers 24e, 124e, and they assist in moving the film 42. Shafts 134 and 136 drive the top drive shaft roll 12 and the bottom drive roll 18 respectively.

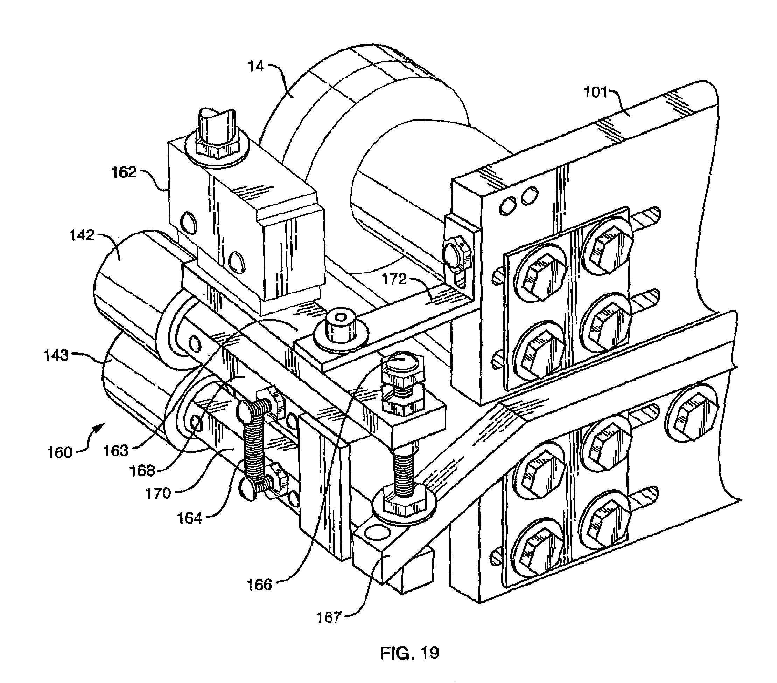

Referring to FIG. 19, a rear perspective view is shown of a film guide assembly 160 comprising film tracking rollers 142, 143 attached to an end of the side sealer 100. The tracking rollers 142, 143 guide the film 42 into the side sealer 100, and they can pivot for providing a lead-in angle. A safety jam micro-switch 162 is provided for shutting down the entire side sealer 100 if something substantially thicker than the film 42 gets between the rollers 142, 143. The micro-switch 162 mounts on a first end of top arm 163 which is held in place by a bracket 172 having one end attached to a rear wall 101 of side sealer 100 and the other end bolted to an upper surface of a top arm 163. The second end of top arm 163 comprises a mounting screw extending through the top arm 163 down to a support bar 167. The tracking roller 142 mounts on the end of top guide 168, and tracking roller 143 mounts on the end of bottom guide 170. A spring is connected between the top guide 168 and the bottom guide 170 for setting the correct tracking tension on the film 42 as it passes through the tracking rollers 142, 143.

This invention has been disclosed in terms of certain embodiments. It will be apparent that many modifications can be made to the disclosed apparatus without departing from the invention, Therefore, it is the intent of the appended claims to cover all such variations and modifications as come within the true spirit and scope of this invention.

## Claims

1. A side sealer apparatus (10,100) for cutting and sealing two layers of heat sealable material (42) together, said apparatus comprising a heat generating means (28) for generating heat to seal said heat sealable material and **characterised by** means (38) connected to said heat generating means for providing closed loop control of said heat generating means in accordance with a predetermined heat setting.

2. The side sealer apparatus of claim 1 further comprising means for moving said heat sealable material through said side sealer apparatus and where the heat generating means is attached in a path of said heat sealable material.

3. The side sealer apparatus as recited in Claim 1 or 2 wherein said heat-sealable material comprises a thermoplastic film (42).

4. The side sealer apparatus as recited in any preceding Claim wherein said heat generating means comprises an elongated metal sheathed body including an internal heating mechanism and a thermocouple.

5. The side sealer apparatus as recited in Claim 2 and either Claim 3 or 4 when dependent on Claim 2 wherein sand moving means comprises a conveyor (52).

6. The side sealer apparatus as recited in any preceding Claim wherein said apparatus comprises:
a top drive roll (12) spaced-apart from a top idler roll (14);
a bottom drive roll (18) spaced-apart from a bottom idler roll (20) and positioned immediately under said top drive roll and top idler roll respectively;
a first pair of spaced-apart belts (15,16) positioned around and between said top drive roll and said top idler roll;
a second pair of spaced-apart belts (21,22) positioned around and between said bottom driver roll and said bottom idler roll.

7. The side sealer apparatus of Claim 6 wherein said heat generating means is mounted on said side sealer apparatus at a predetermined angle relative to horizontal between said belts positioned on an inner side of said heater and said belts positioned on an outer side of said heater.

8. The side sealer apparatus of any of either Claim 6 or 7 further comprising a top belt guide (25) having a bottom groove for a portion of one of the first pair of spaced apart belts to travel in, to provide nip pressure on the heat sealable material.

9. The side sealer apparatus of any one of Claims 6 to 8 further comprising a bottom belt guide (27) having a top groove for an upper portion of one of the second pair of spaced apart belts to travel in, to provide nip pressure on the heat-sealable material.

10. The side sealer apparatus of either Claim 8 or 9 wherein at least surfaces of the groove of the or each belt guide have a low coefficient of friction.

11. The side sealer apparatus of Claim 10 wherein the or each guide are formed from or at least partially coated with a material having a low coefficient of friction.

12. The side sealer apparatus of Claim 10 or 11 wherein the low coefficient of friction is a dynamic coefficient of friction of less than 0.3.

13. The side sealer apparatus of Claim 12 wherein the dynamic coefficient of friction is about, or less than, 0.2.

14. The side sealer apparatus of any of Claims 5 to 7 further comprising a plurality of upper nip rollers (24a-e, 124a-e) positioned between said top drive roll and said top idler roll and in contact with a lower portion of at east one of said first pair of spaced apart belts.

15. The side sealer apparatus of any of Claims 5 to 7 and 14 further comprising a plurality of lower nip rollers (26a-e, 126a-e) positioned between said bottom drive roll and said bottom idler roll and in contact with an upper portion of said second pair of spaced apart belts.

16. The side sealer apparatus of either Claim 14 or 15 wherein the plurality of upper and/or lower nip rollers are provided in pairs for contacting each belt of each pair of belts respectively.

17. The side sealer apparatus of any of Claims 14 to 16 further comprising means for providing an adjustable nip pressure on said pairs of upper nip rollers in contact with said first pair of belts.

18. The side sealer apparatus as recited in Claim 17 wherein said means for providing an adjustable nip pressure on said pairs of upper nip rollers in contact with said first pair of spaced-apart belts comprises:
a nip roller mounting frame (114) for holding said upper nip rollers in a horizontal row, said nip roller mounting frame being attached to a wall of said side sealer via a hinge (116); and
means for applying pressure to an upper surface of said nip roller mounting frame to produce said adjustable nip pressure.

19. The side sealer as recited in Claim 18, wherein said pressure applying means comprises at least one toggle clamp (104) having a leg extending to and in contact with said upper surface of said nip roller mounting frame.

20. A side sealer system comprising:
a roll of thermoplastic film (42);
a thermoplastic film inverting head (56) for redirecting said film 90 degrees and turning it inside out;
a conveyor (52) passing by said film inverting head for moving a product (50) within said thermoplastic film;
a side sealer apparatus located along a side of said conveyor and adjacent to said film inverting head; and **characterised in that**
said side sealer apparatus comprises a heater (28) having a closed loop temperature controller (38), said heater being for cutting and sealing near an edge of said thermoplastic film.

21. The side sealer system as recited in Claim 20 wherein said film inverting head comprises an upper arm (62) and a lower arm (64) for opening said thermoplastic film to surround a product on said conveyor with said film.

22. A method for cutting and sealing two layers of heat sealable material (42) together by a side sealing apparatus (10,100) comprising the steps of:
moving said heat sealable material in contact with said side sealer apparatus;
generating heat to seal near said edge of sealable material with means (28) attached to said side sealer in the path of said heat-sealable material; and
providing closed loop control of said heat generating means in accordance with a predetermined heat setting with means (38) connected to said heat generating means.

23. The method as recited in Claim 22 wherein said heat-sealable material comprises a thermoplastic film.

24. The method as recited in Claim 22 or 23 wherein said step of moving said heat sealable material in contact with said side sealer apparatus is performed by means of a conveyor (52).

25. The method as recited in any of claims 22 to 24 wherein said method comprises the steps of:
providing a top drive roll (12)spaced-apart from a top idler roll (14);
providing a bottom drive roll (18) spaced-apart from a bottom idler roll (20) and positioned immediately under said top drive roll and top idler roll respectively;
positioning a first pair of spaced-apart belts (15,16) around and between said top drive roll and said top idler roll;
positioning a second pair of spaced-apart belts (21,22) around and between said bottom driver roll and said bottom idler roll; and
mounting said heat generating means on said side sealer apparatus at a predetermined angle relative to horizontal between said belts positioned on an inner side of said heater and said belts positioned on an outer side of said heater.

26. The method as recited in Claim 25 comprising the steps of:
attaching a plurality of pairs of upper nip rollers (24a-e, 124a-e) between said top drive roll and said top idler roll and in contact with a lower portion of said first pair of spaced-apart belts;
attaching a plurality of pairs of lower nip rollers (26a-e, 126a-e) between said bottom drive roll and said bottom idler roll and in contact with an upper portion of said second pair of spaced-apart belts; and
providing an adjustable nip pressure on said pairs of upper nip rollers in contact with said first pair of spaced-apart belts.

27. The method as recited in any of Claims 22 to 26 wherein said step of generating heat comprises the step of providing an elongated metal sheathed body including an internal heating mechanism and a thermocouple.

28. The method as recited in any of Claims 22 to 27 wherein said step of generating heat comprises the step of mounting a heat generating means on said side sealer apparatus at a predetermined angle relative to horizontal between one of said belts positioned on an inner side of the heater and one of said belts positioned on an outer side of the heater.

29. The method as recited in Claim 26 wherein said step of providing an adjustable nip pressure on said pairs of upper nip rollers in contact with said first pair of spaced-apart belts comprises the steps of:
holding said upper nip rollers in a horizontal row with a nip roller mounting frame (114), said nip roller mounting frame being attached to a wall of said side sealer via a hinge (116); and
applying pressure to an upper surface of said nip roller mounting frame to move said mounting frame downward and provide said adjustable nip pressure.

30. The method as recited in Claim 29, wherein said step of applying pressure comprises the step of providing at least one toggle clamp (104) having a leg extending to and in contact with said upper surface of said nip roller mounting frame.

31. A side sealer apparatus (10,100)for cutting and sealing two layers of heat-sealable material (42) together comprising:
means for moving the heat-sealable material through the side sealer apparatus;
means (28) attached to said side sealer apparatus in the path of said heat-sealable material for generating heat to cut and seal said heat-sealable material near said edge;
a top drive roll (12) spaced-apart from a top idler roll (14);
a bottom drive roll (18) spaced-apart from a bottom idler roll (20) and positioned immediately under the top drive roll and top idler roll respectively;
a first pair of spaced-apart belts (15,16) positioned around and between the top drive roll and the top idler roll on a side of the apparatus above the moving means;
a second pair of spaced-apart belts (21,22) positioned around and between the bottom driver roll and the bottom idler roll;
a top belt guide (25), having a low coefficient of friction and a bottom groove for a lower portion of an outer one of the first pair of spaced apart belts to travel in, to provide nip pressure on the heat-sealable material; and
a bottom belt guide (27), having a low coefficient of friction and a top groove for an upper portion of an outer one of the second pair of spaced apart belts to travel in, to provide nip pressure on the heat-sealable material.

32. A side sealer apparatus (10,100) for cutting and sealing two layers of heat-sealable film (42) together near an edge comprising:
means for moving the heat-sealable material through said side sealer apparatus;
means(28) attached to said side sealer apparatus in the path of said heat-sealable film for generating heat to cut and seal said heat-sealable film together near said edges;
a top drive roll (12) spaced-apart from a top idler roll (14);
a bottom drive roll (18) spaced-apart from a bottom idler roll (20) and positioned immediately under said top drive roll and said top idler roll respectively;
a first pair of spaced-apart belts (15,16) positioned around and between said top drive roll and said top idler roll on a side of the apparatus above the moving means;
a second pair of spaced-apart belts (21,22) positioned around and between said bottom driver roll and said bottom idler roll;
a plurality of pairs of upper nip rollers (24a-e, 124a-e) positioned between said top drive roll and said top idler roll and in contact with a lower portion of said first pair of spaced-apart belts;
a plurality of pairs of lower nip rollers (26a-e, 126a-e) positioned between said bottom drive roll and said bottom idler roll and in contact with an upper portion of said second pair of spaced-apart belts; and
means for providing an adjustable nip pressure on said pairs of upper nip rollers in contact with said first pair of spaced-apart belts.

33. The side sealer apparatus as recited in either Claim 31 or 32 wherein:
said heat generating means is mounted on said side sealer apparatus at a predetermined angle relative to horizontal between the belts positioned on an inner side of the heater and the belts positioned on an outer side of the heater.

34. The side sealer apparatus as recited in any of Claims 31 to 33 wherein said heat-sealable material comprises a thermoplastic film.

35. The side sealer apparatus as recited in any of Claims 31 to 34 wherein said heat generating means comprises an elongated metal sheathed body including an internal heating mechanism and a thermocouple.

36. The side sealer apparatus as recited in any of Claims 31 to 35 wherein said moving means comprises a conveyor (52).

37. The side sealer apparatus as recited in any of Claims 31 to 36 wherein said heat generating means comprises an elongated metal sheathed body including an internal heating mechanism and a thermocouple.

38. The side sealer apparatus as recited in Claim 32 wherein said means for providing an adjustable nip pressure on said pairs of upper nip rollers in contact with said first pair of spaced-apart belts comprises:
a nip roller mounting frame (114) for holding said upper nip rollers in a horizontal row, said nip roller mounting frame being attached to a wall of said side sealer via a hinge (116); and
means for applying pressure to an upper surface of said nip roller mounting frame to produce said adjustable nip pressure.

39. The side sealer as recited in Claim 38, wherein said pressure applying means comprises at least one toggle clamp (104) having a leg extending to and in contact with said upper surface of said nip roller mounting frame.

40. A method for cutting and sealing two layers of heat-sealable film (42) together in a side sealer apparatus (10,100) comprising the steps of:
moving said heat-sealable film through said side sealer apparatus;
generating heat to cut and seal said heat-sealable film together near said edge with means attached to said side sealer apparatus in the path of said film;
providing a top drive roll (12) spaced-apart from a top idler roll (14) on said side sealer apparatus;
providing a bottom drive roll (18) spaced-apart from a bottom idler roll (20) on said side sealer and positioned immediately under said top drive roll and said top idler roll respectively;
positioning a first pair of spaced-apart belts (16,17) around and between said top drive roll and said top idler roll on a side of said side sealer apparatus above said means for moving said film;
positioning a second pair of spaced-apart belts (21,22) around and between said bottom driver roll and said bottom idler roll;
attaching a plurality of pairs of upper nip rollers (24a-e, 124a-e) between said top drive roll and said top idler roll and in contact with a lower portion of said first pair of spaced-apart belts;
attaching a plurality of pairs of lower nip rollers (26a-e, 126a-e) between said bottom drive roll and said bottom idler roll and in contact with an upper portion of said second pair of spaced-apart belts; and
providing an adjustable nip pressure on said pairs of upper nip rollers in contact with said first pair of spaced-apart belts.

41. The method as recited in Claim 40 wherein said step of moving said heat-sealable film through said side sealer apparatus comprises the step of providing a conveyor (52) .

42. The method as recited in either Claim 40 or 41 wherein said step of generating heat comprises the step of providing an elongated metal sheathed body including an internal heating mechanism and a thermocouple.

43. The method as recited in any of Claims 40 to 42 wherein said method comprises the step of sealing thermoplastic film.

44. The method as recited in any of Claims 40 to 43 wherein said step of generating heat comprises the step of mounting a heat generating means (28) on said side sealer apparatus at a predetermined angle relative to horizontal between one of said belts positioned on an inner side of the heater and one of said belts positioned on an outer side of the heater.

45. The method as recited in any of Claims 40 to 44 wherein said step of providing an adjustable nip pressure on said pairs of upper nip rollers in contact with said first pair of spaced-apart belts comprises the steps of:
holding said upper nip rollers in a horizontal row with a nip roller mounting frame (114), said nip roller mounting frame being attached to a wall of said side sealer via a hinge (116); and
applying pressure to an upper surface of said nip roller mounting frame to move said mounting frame downward and provide said adjustable nip pressure.

46. The method as recited in Claim 45, wherein said step of applying pressure comprises the step of providing at least one toggle clamp (104) having a leg extending to and in contact with said upper surface of said nip roller mounting frame.
